# EUROPEAN PATENT APPLICATION

(11) **EP 3 335 888 A1**
(43) Date of publication of application: **20.06.2018**
(21) Application number: 16204484.6
(22) Date of filing: 15.12.2016
(51) Int. Cl.: B41J 3/407, B41J 11/46, B41J 2/32, B41J 11/70, B41J 15/04, G01G 23/38, G01G 19/414

(54) **METHOD OF ASCERTAINING THE CORRECT LOADING OF A PAPER OR LABEL ROLL IN A THERMAL PRINTER**

(71) Applicant: Mettler-Toledo (Albstadt) GmbH, 72458 Albstadt (DE)
(72) Inventor: Kempf, Edgar, 72514 Inzigkofen (DE); Holike, Walter, 72351 Geislingen (DE); Gerstenecker, Albert, 72469 Messstetten (DE)
(74) Representative: Mettler-Toledo

(57) **Abstract**

A method for detecting when a thermal paper roll (1), in particular a linerless label roll (1), has been loaded incorrectly in a thermal printer includes the following steps:
- Step 1: The print head (3) is activated to print a test mark (17) on the thermal paper ribbon (9).
- Step 2: The paper transport roller (6) is activated to transport the paper ribbon (9) in reverse direction by a predetermined first distance as required to bring the test mark (17) back to the paper-end detector (2).
- Decision: If the test mark (17) is detected by the paper-end detector (2) the method continues at step 3; if no test mark (17) is detected the method continues at step 4.
- Step 3: The paper transport roller (6) is activated to transport the paper ribbon (9) in forward direction by a predetermined second distance as required to advance the test mark (17) past the cutter device (4, 5); the cutter device (4, 5) is activated to cut off the overhanging end of the paper ribbon (9); the printer is ready to operate.
- Step 4: The printer is blocked against further operation until the paper roll (1) is repositioned correctly in the roll cage (14).

## Description

The invention concerns a method of ascertaining, when loading a new paper roll or label roll into a printer, that the roll is placed in the roll cage in the correct orientation, i.e., that the side of the paper which carries the temperature-sensitive coating faces towards the print head.

Label printers are frequently used together with, attached to, or built into price-calculating weighing scales used in retail stores, typically in meat, cheese, deli, or seafood departments, or at self-service weighing stations where the customer puts his or her purchases (vegetables, fruits, etc.) on the scale to weigh them. After the respective product code number for the merchandise has been entered on a keyboard, the scale calculates the purchase price and produces the transaction label by way of the attached label printer.

The field of label printers can be divided into different categories according to the different types of labels. On the one hand, there are labels that are adhesively connected to a carrier foil from which they are separated after the printing and delivered through a label output slot. The customer takes the label from the printer and sticks it on the merchandise to be identified. Labels of this type are necessarily of a uniform size which determines the amount of information that can be printed on an individual label. After the label has been separated from the carrier foil, the latter has to be rolled up again, a function that is performed in most cases in the label printer itself. Labels of this type have the further disadvantage that exchanging or loading a new label roll is more difficult than with simple paper rolls, and that special measures are necessary to detect the label on the carrier foil and to synchronize the paper-feeding mechanism with the print unit accordingly.

The need to overcome the drawbacks of a carrier foil led to the development of linerless labels. In essence, linerless labels can be described as label paper that is coated with an adhesive on the backside. In contrast to labels on carrier foils, the amount of information that can be printed on a linerless label does not need to fit on a predetermined amount of space. The label is simply cut off the roll after the printout has been completed, independent of the length of paper ribbon used for each individual label. A printer for linerless labels therefore includes a cutter device to separate the printed label from the unprinted linerless label paper ribbon.

In its simplest form, the cutter device in a linerless label printer is a tear-off bar or tear-off blade, where the printed label is cut off from the unprinted label paper ribbon by manually pulling the label from the slot. A linerless label printer equipped with a tear-off bar is relatively forgiving of the operator error described hereinabove at the outset: if a new roll is placed in the roll cage in the wrong orientation, the adhesive side may stick to the print head and to the tear-off bar after the first attempted printout, but the stuck paper can easily be peeled off and the roll turned over into the correct position.

The problem that the present invention seeks to solve occurred with a new type of printer recently introduced by the assignee of the present invention with the features of an easy-loading roll cage and an automatic paper cutter that shears the completed label off the label paper roll without manual action by the user. Field experience with the new printer has shown that, if a new roll of linerless label paper is set into the roll cage of the printer in the wrong orientation, i.e. with the adhesive coating facing towards the print head, this operator error will cause a serious breakdown failure of the printer which can only be repaired by a service technician.

Store employees may sometimes install a label paper roll the wrong way due to inattention or unfamiliarity with the equipment. As mentioned above, if this error happened in a printer with a simple tear blade, the problem was easily solved by turning the label paper roll into the correct position. In contrast, with the new automatic cutter device, if a new label paper roll is set into the roll cage incorrectly, i.e. with the adhesive facing towards the print head, the first time the blades of the automatic cutter device cut into the adhesive side, the paper will become glued to the blades and entangled in the cutting mechanism.

Thus, if a new label paper roll is set in the roll cage with the wrong orientation, the initial cut which is performed automatically after closing the printer door will immediately make the printer unusable, as the blades are blocked or at least fouled with glue and bits of paper and, as a consequence, the printer will no longer function reliably. Furthermore, in a printer equipped with the aforementioned easy-loading roll cage, a fixed shear blade of the cutter device is part of the base, while the movable shear blade mechanism is mounted inside the cover of the printer enclosure. Thus, the adhesive label material caught between the blades can even make it impossible to open the cover of the printer housing without a destructive application of force. Normally, a service technician has to be called to bring the printer back into working order.

Elementary precautions such as warning messages on the linerless paper rolls, on the printer, or on the display screen of the weighing scale to which the printer is attached have proven ineffective, as they are usually ignored in the hurried effort to replace the used-up paper roll as quickly as possible. Solutions that would involve a product change of the paper rolls were ruled out, as they would require cooperation from manufacturers of linerless label paper. In addition, existing stocks of linerless label rolls would have to be exchanged or discarded. Likewise, a major hardware design change of the printer was found undesirable.

The objective of the present invention is therefore to prevent the problem of printer breakdowns due to an incorrectly loaded roll of linerless label paper and, more specifically, to provide a solution that could be implemented with no change in the hardware design of the printer or the type of label paper rolls.

This task is solved by a method of operating a thermal printer as described in the independent claims 1. Advantageous features, further developments and variants of the inventive solution are set forth in the dependent claims.

The method of operating a thermal printer in accordance with the present invention applies to a thermal printer with a roll cage for holding a roll of thermal paper ribbon, further with a thermal print head, a transport roller driven by a motor, a cutter device, and a paper-end detector, wherein a free end of the thermal paper ribbon runs along a paper transport path from the roll cage, past the paper-end detection sensor, between the thermal print head and the transport roller, through the cutter device, and through an exit slot of the printer. The purpose of the method is to ascertain that the paper roll in the roll cage is positioned in correct orientation, so that the heat-sensitive print side of the paper faces towards the print head. According to the invention, the method is performed by the printer immediately after a new roll of thermal paper has been loaded, and the steps of the method can be described as follows:
- In step 1, activating the print head to print a test mark on the paper ribbon;
- In step 2, activating the transport roller to transport the paper ribbon in reverse direction by a predetermined first distance as required to bring the test mark back to the paper-end detector; and
- Trying to detect the test mark by the paper-end detector:
   if the test mark is detected the method continues at step 3,
   if no test mark is detected the method continues at step 4;
- In step 3, activating the transport roller to transport the paper ribbon in forward direction by a predetermined second distance as required to advance the test mark past the cutter device; and
- Activating the cutter device to cut off the overhanging end of the paper ribbon, and the printer is ready to operate.
- In step 4, blocking the printer against further operation until the paper roll is correctly repositioned in the roll cage.

It should be noted that the method does not prevent the operator from making the initial error of loading a paper roll the wrong way, as the applicant found this goal to be unachievable without undesirable changes to the printer and/or the paper. What the method does achieve is blocking the printer from operating with an incorrectly loaded paper roll. This is essential in the case of a linerless label printer with an automatic cutter device where an incorrectly loaded label paper roll can seriously harm the printer by jamming up the cutter device already in the first cut, as has been described above.

The method according to the invention is most advantageously used in a weighing scale of the type mentioned above which includes a linerless label printer with an automatic cutter device. Other applications where the inventive method could be used include for example the printing of shipping labels or the labeling of prepackaged random-weight goods in a packaging line.

The method can also be used advantageously with regular (i.e. non-adhesive) thermal paper, for example in cash registers or in filling station pumps. In this case the error of loading a paper roll the wrong way causes no harm to the printer, but the fact that the printer produces only white, unprinted receipt tickets can nevertheless be a major nuisance. Thus, the simple solution provided by the present invention will also be a welcome improvement in the process of printing on regular thermal paper.

In a thermal printer that is functionally connected to a device with a display, such as a weighing scale or a cash register, the method can advantageously include the additional step of displaying information concerning the operational status of the printer. The displayed information could for example be a message that the printer is ready for operation, a message that a new paper roll needs to be loaded, or a message that the paper roll needs to be reloaded with the correct orientation.

In a preferred configuration of the paper-end detector, a radiation emitter and a radiation sensor are both arranged on the same side of the paper ribbon as the print head, placed in a position where radiation originating from the radiation emitter and reflected by the surface of the paper ribbon or linerless label ribbon will fall on the radiation sensor. Thus a change in the electrical signal of the radiation sensor indicates that the test mark on the paper ribbon is inside the detection zone of the radiation sensor.

The test mark that is printed on the paper ribbon in step 1 of the method (provided that the paper roll has been loaded correctly) can have the form of one or more solidly filled printed areas that have a different reflectivity to incident radiation from the radiation emitter than the surrounding non-printed surface area of the paper ribbon. A plurality of such solidly filled printed areas can be arranged in a sequence along the direction of the paper path. In this case, the method can include the refinement that the detection of the test mark includes counting the number of solidly filled printed areas as a means to increase the reliability of the method. Advantageously, the one or more solidly filled printed areas are configured as one or more solidly filled printed stripes running transverse to the direction of the paper ribbon.

Typically, infrared emitters and sensors are used for paper-end detectors in thermal printers. However, the IR sensors commonly employed for this purpose cannot reliably distinguish printed from non-printed areas on thermal paper. An IR sensor capable of sensing the heat produced by a solidly filled, preferably black printed area would have to operate within a specific range of wavelengths. For a reliable implementation of the inventive method, it is therefore preferable to choose a paper-end detector that works in the visible part of the optical spectrum.

Alternatively, the spectral operating range of at least the radiation sensor could lie in the infrared part of the electromagnetic radiation spectrum, in which case the radiation sensor could sense the heat radiated back by a solidly filled, preferably black printed area on the paper ribbon.

In preferred embodiments of the invention the transport roller is driven by a stepper motor. Accordingly, in step 2 of the inventive method, the stepper motor is energized to perform a predetermined first number of steps in the reverse direction, and in step 3 the motor is energized to perform a predetermined second number of steps in the forward direction.

The inventive method and its implementation in a linerless label printer will be explained in detail with the help of the attached drawings, wherein
- Fig. 1a: shows a pictorial representation of a printer with a correctly loaded paper roll;
- Fig. 1b: shows a pictorial representation of step 1 of the method in the case of a correctly loaded paper roll;
- Fig. 1c: shows a pictorial representation of step 2 of the method in the case of a correctly loaded paper roll;
- Fig. 1d: shows a pictorial representation of step 3 of the method in the case of a correctly loaded paper roll;
- Fig. 1e: shows a pictorial representation of activating the cutter device in step 3 of the method in the case of a correctly loaded paper roll;
- Figure 2: shows a pictorial representation of a printer with an incorrectly loaded paper roll; and
- Figure 3: represents a flowchart of the inventive method.

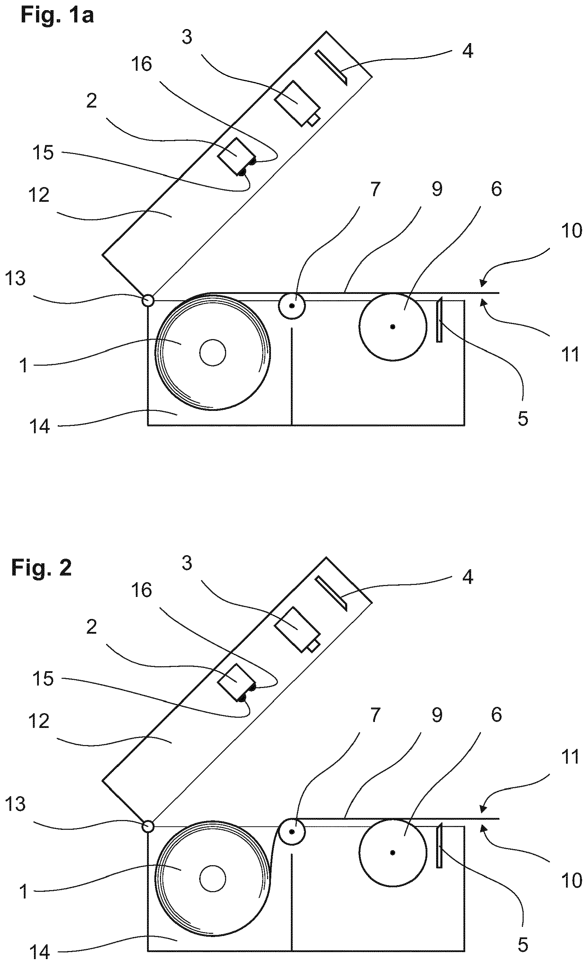

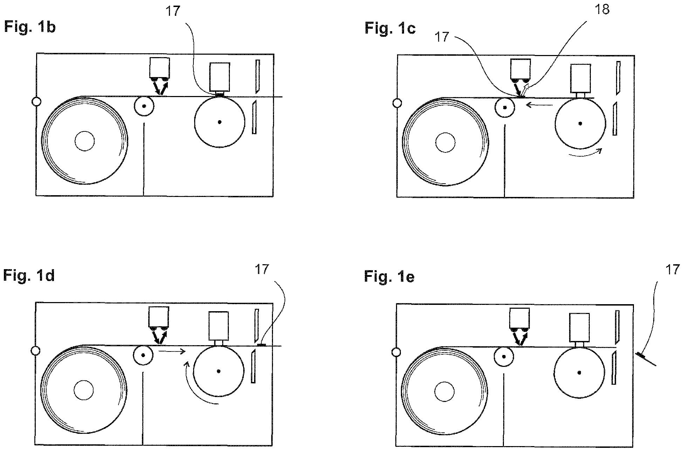

Figures 1 a to 1 e and Figure 2 represent the same printer. Some of the reference symbols for the individual parts of the printer are therefore shown only in Figure 1 a and are not repeated in Figures 1 b to 1 e and Figure 2.

Figures 1 a to 1 e illustrate how the method works in the case of a correctly loaded paper roll. Shown in a schematically simplified form, the essential functional elements of a printer that cooperate with each other in the method are the paper roll 1, the paper-end detector 2, the print head 3, the cutter blades 4 and 5, the paper transport roller 6, and the paper guide roller 7. The thermal paper ribbon 9 has a temperature-sensitive print side 10 and a backside 11. The thermal paper ribbon 9 can be linerless label paper, in which case the backside 11 carries a special adhesive coating.

In Figure 1a the schematically indicated enclosure top 12 with the hinge 13 is shown in the open state. As shown in this drawing, the paper-end detector 2, the print head 3 and the upper cutter blade 4 are arranged in the enclosure top 12 and are raised with the enclosure top 12 when the printer is opened to load a new paper roll or linerless label roll 1. In Figure 1a, the roll 1 has been loaded correctly into the roll cage 14, so that the print side 10 faces towards the print head 3. The free end of the paper ribbon 9 has been pulled out over the paper guide roller 7, the paper transport roller 6 and the lower cutter blade 5.

In Figure 1 b, the enclosure top 12 has been shut, which automatically triggers the print head 3 to print a test mark 17 on the paper ribbon 9, for example a black stripe across the ribbon 9. At the paper-end detector 2, light falling from the light emitter 15 on the unprinted white surface of the paper ribbon 9 is reflected and received by the light sensor 16.

In Figure 1 c, the paper ribbon has been moved in the reverse direction by the paper transport roller which is driven by a stepper motor. A predetermined first number of steps have brought the test mark back to the paper-end detector 2. The light falling from the light emitter 15 on the test mark is not reflected to the light sensor 16, as symbolically indicated by the blank arrow 18. The corresponding change in the light sensor signal confirms the presence of the test mark 17 on the paper ribbon, which indicates that the thermal paper roll 1 is correctly oriented.

In Figure 1 d, the paper ribbon has been moved in the forward direction by the paper transport roller. A predetermined second number of steps by the stepper motor have brought the test mark 17 to the outside of the cutter blades 4, 5.

In Figure 1 e, the cutter device 4, 5 has trimmed off the leading end of the paper ribbon with the test mark 17. The printer is ready for operation with the new paper roll 1.

Figure 2 shows the same printer with an incorrectly loaded paper roll 1. In contrast to Figure 1 a, the paper roll 1 in Figure 2 has been loaded into the roll cage 14 in the wrong orientation, so that the backside 11 of the paper ribbon 9 faces towards the print head 3. The free end of the paper ribbon 9 has again been pulled out over the paper guide roller 7, the paper transport roller 6 and the lower cutter blade 5. Shutting the enclosure top 12 again automatically activates the print head into attempting to print a test mark 17 on the thermal paper ribbon 9. However, the temperature-sensitive print side 10 is facing away from the print head 3, and nothing is printed on the inert backside 11.

Next, as in Figure 1 b the paper ribbon is moved in the reverse direction by the paper transport roller with the predetermined first number of steps which, in the case of a correctly loaded paper roll, would bring the test mark 17 back to the paper-end detector 2. However, since there is no test mark 17 present, the light falling from the light emitter 15 on the unprinted white backside of the paper ribbon 9 is reflected and received by the light sensor 16 with no change in the sensor signal. The absence of a change in the light sensor signal indicates that the thermal paper roll 1 is incorrectly oriented. The printer is blocked against further operation until the user has turned the paper roll 1 in the roll cage 14 into the correct position.

In the case of a linerless label printer, it is possible that the attempt to print the test mark 17 on the adhesive backside of an incorrectly loaded label paper ribbon will cause the paper to stick to the print head 3. The paper transport roller 6 will perform its reverse rotation in accordance with the method, but the friction-based traction will not be strong enough to take the paper ribbon along. The effect will still be the same, i.e. the paper-end detector will not detect a test mark 17 and, consequently, the printer is blocked against further operation. The linerless label ribbon sticking to the print head 3 can easily be pulled off without damage, and the paper roll 1 can be repositioned correctly in the roll cage 14.

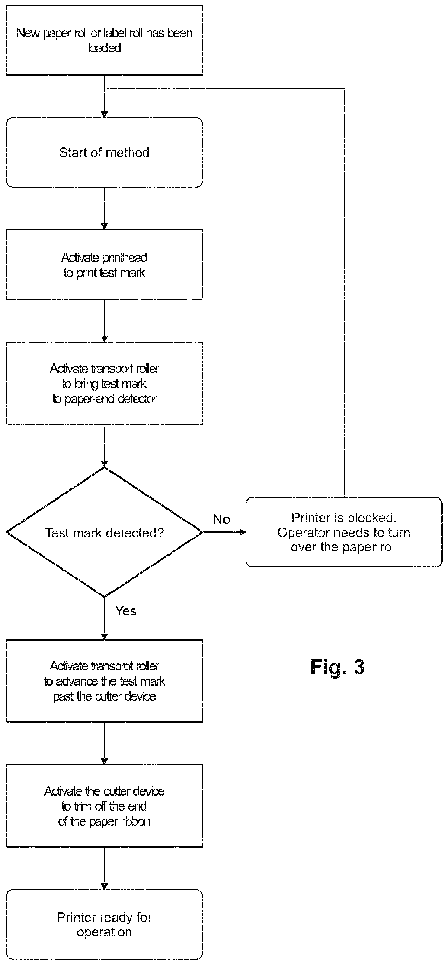

Figure 3 illustrates the underlying concept of the invention through a flowchart diagram of the method: If a paper roll has been loaded incorrectly, the error is detected, the operator receives a message to reload the paper roll in the correct orientation, and the method returns to the first step. In other words, in case of an incorrectly loaded paper roll, the method simply loops back to the start of the method. This solves the problem of an incorrectly loaded paper roll, in particular a linerless label roll, without requiring a change in the hardware design of the printer or the type of label paper rolls.

While the invention has been described through the presentation of a specific embodiment, it is considered self-evident that the inventive method can be implemented in virtually any kind of thermal printer using thermal roll paper, in particular linerless label rolls. For example, the illustrated configuration of the printer with a hinged top cover in Figures 1 and 2 could be replaced by a configuration where the bottom part of the printer is configured as a pull-out drawer, or the paper guide roller could be replaced by a different paper-guiding arrangement. It should be understood that such alternative implementations of the inventive concepts fall within the bounds of protection that is hereby sought for the present invention.

### List of Reference Symbols

- 1: paper roll, linerless label roll
- 2: paper-end detector
- 3: print head
- 4: upper cutter blade
- 5: lower cutter blade
- 6: paper transport roller
- 7: paper guide roller
- 9: thermal paper ribbon, linerless label ribbon
- 10: print side
- 11: backside
- 12: enclosure top
- 13: hinge
- 14: roll cage
- 15: radiation emitter, light emitter
- 16: radiation sensor, light sensor
- 17: test mark
- 18: blank arrow

## Claims

1. Method of operating a thermal printer, wherein the thermal printer comprises a roll cage (14) for holding a roll (1) of thermal paper ribbon (9), a thermal print head (3), a paper transport roller (6) driven by a motor, a cutter device (4, 5), and a paper-end detector (2), wherein a free end of the thermal paper ribbon (9) runs along a paper transport path from the roll cage (14), past the paper-end detector (2), between the thermal print head (3) and the paper transport roller (4), through the cutter device 4, 5), and through an exit slot of the printer, and wherein said method serves to ascertain that the paper roll (1) in the roll cage (14) is positioned in correct orientation with a heat-sensitive print side (10) of the paper facing towards the print head (3), **characterized in that** the method is performed by the printer immediately after a new roll (1) of thermal paper has been loaded in the roll cage (14), and that the method comprises:
- step 1, activating the print head (3) to print a test mark (17) on the paper ribbon (9);
- step 2, activating the paper transport roller (6) to transport the paper ribbon (9) in reverse direction by a predetermined first distance as required to bring the test mark (17) back to the paper-end detector (2), and
trying to detect the test mark (17) by the paper-end detector (2):
if the test mark (17) is detected the method continues at step 3,
if no test mark (17) is detected the method continues at step 4;
- step 3, activating the paper transport roller (6) to transport the paper ribbon (9) in forward direction by a predetermined second distance as required to advance the test mark (17) past the cutter device (4, 5), and
activating the cutter device (4, 5) to cut off the overhanging end of the paper ribbon (9), and the printer is ready to operate;
- step 4, blocking the printer against further operation until the paper roll (1) is repositioned correctly in the roll cage (14).

2. Method according to claim 1, wherein the thermal paper comprises linerless label paper.

3. Method according to claim 1 or 2, wherein the thermal printer is functionally connected to a device with a display, **characterized in that** the method comprises the additional step of displaying information concerning the operational status of the printer.

4. Method according to claim 3, wherein the connected device with the display comprises a weighing scale.

5. Method according to claim 3 or 4, **characterized in that** the displayed information comprises at least one of the following:
- a message that the printer is ready for operation,
- a message that a new paper roll (1) needs to be loaded,
- a message that the paper roll (1) needs to be reloaded with the correct orientation.

6. Method according to one of the claims 1 to 5, wherein the paper-end detector (2) comprises a radiation emitter (15) and a radiation sensor (16), both of which are arranged on the same side of the paper ribbon (9) as the print head (3), positioned so that radiation originating from the radiation emitter (15) and reflected by the surface of the paper ribbon (9) or linerless label ribbon (9) will fall on the radiation sensor 16), **characterized in that** the presence of a test mark (17) on the paper ribbon (9) inside a detection zone of the radiation sensor (16) causes a change in an electrical signal of the radiation sensor (16).

7. Method according to claim 6, wherein the test mark (17) comprises at least one solidly filled printed area of different reflectivity than a surrounding non-printed surface area of the paper ribbon with regard to radiation in a spectral operating range of the radiation emitter (15) and the radiation sensor (16).

8. Method according to claim 7, wherein the test mark (17) comprises a plurality of solidly filled printed areas following each other in a sequence along the direction of the paper path.

9. Method according to claim 7, wherein the at least one solidly filled printed area is configured as at least one solidly filled printed stripe running transverse to the direction of the paper ribbon (9).

10. Method according to one of the claims 7 to 9, wherein the spectral operating range of the radiation emitter (15) and the radiation sensor (16) lies in the visible part of the optical spectrum.

11. Method according to one of the claims 7 to 9, wherein the spectral operating range of at least the radiation sensor (16) lies in the infrared part of the electromagnetic radiation spectrum and the radiation sensor (16) is operable to sense the heat radiated by a solidly filled, preferably black printed area on the paper ribbon (9).

12. Method according to one of the claims 1 to 11, wherein the motor of the paper transport roller (6) comprises a stepper motor, **characterized in that** in step 2 of the method the motor is energized to perform a predetermined first number of steps in the reverse direction, and in step 3 the motor is energized to perform a predetermined second number of steps in the forward direction.
